# EUROPÄISCHE PATENTSCHRIFT

(11) **EP 1 211 439 B1**
(45) Veröffentlichungstag und Bekanntmachung des Hinweises auf die Patenterteilung: **29.10.2003**
(21) Anmeldenummer: 00126331.8
(22) Anmeldetag: 02.12.2000
(51) Int. Cl.: F16H 55/18, F16H 61/00

(54) **Stufenloses Getriebe**
Continuously variable transmission
Transmission à variation continue

(43) Veröffentlichungstag der Anmeldung: 05.06.2002
(73) Patentinhaber: Ford Global Technologies, Inc., A subsidiary of Ford Motor Company, Dearborn, Michigan 48126 (US)
(72) Erfinder: Wehren, Wilhelm, 50171 Kerpen/Blatzheim (DE); Geffers, Peter, 50829 Köln (DE); Kirchhoffer, Johann, 50737 Köln (DE)
(74) Vertreter: Drömer, Hans-Carsten, Dr.-Ing.

(56) Entgegenhaltungen:
- US-A- 5 870 928
- US-A- 5 904 633

## Beschreibung

Die Erfindung betrifft ein stufenloses Getriebe für ein Kraftfahrzeug mit einer Kraftübertragung, die von einer Primärriemenscheibe und einer, mit der Primärriemenscheibe über ein Kraftübertragungsband verbundenen Sekundärriemenscheibe gebildet ist, und mit einem der Sekundärriemenscheibe im Kraftfluß nachgeschalteten Reduktionsgetriebe, das ein durch die Sekundärriemenscheibe über ein zwischengeschaltetes Antriebsrad mittelbar oder unmittelbar angetriebenes erstes Reduktionszahnrad und ein von dem ersten Reduktionszahnrad angetriebenes zweites Reduktionszahnrad aufweist, wobei über das zweite Zahnrad ein von dem Getriebe übertragenes Motordrehmoment auf eine Kraftausleitung abgeleitet ist.

Ein derartiges Getriebe ist aus Bosch, "Kraftfahrtechnisches Handbuch", 22. Auflage, VDI-Verlag bekannt. Das Getriebe weist eine stufenlose Kraftübertragung durch die Primärriemenscheibe über das Kraftübertragungsband auf die Sekundärriemenscheibe auf, wobei der wirksame Radius der Primär- und Sekundärriemenscheibe drehzahlabhängig veränderlich ist. Die Riemenscheiben weisen dabei zwei gegen die Kraft einer Feder im Abstand zueinander variable Kegelscheibenhälften auf. Bei steigenden Motordrehzahlen werden die Trumkräfte des Kraftübertragungsbandes, das sich mit den Seiten auf den Kegelscheibenhälften der Riemenscheiben abstützt, auf Seiten der Primärriemenscheibe höher, so daß die Kegelscheibenhälften zusammengedrückt werden und der effektive Radius der Riemenscheibe zunimmt. Durch Nachlassen der Trumkräfte werden wiederum die Kegelscheibenhälften der Primärriemenscheibe entlastet und durch die dann überwiegenden Kräfte an der Sekundärriemenscheibe auseinandergedrückt.

Die so drehmomentabhängig mit veränderlicher Übersetzung übertragene Motorkraft wird über das nachgeschaltete Reduktionsgetriebe entweder unmittelbar auf ein Differential oder auf eine Kardanwelle übertragen. Vor der Primärriemenscheibe ist eine Kupplung angeordnet, die Motorkraft in das Getriebe einkuppelt. Das Kraftübertragungsband ist üblicherweise ein Stahlgliederband, das aus mehreren Einzelbändern besteht, die zur Übertragung des erforderlichen Drehmomentes mit etwa 400 Stahlgliedern besetzt ist, die wiederum mit den Einzelbändern gehalten werden.

Obwohl auf diese Weise ein effektiv stufenlos schaltbares Getriebe geschaffen werden kann, besteht ein Nachteil jedoch darin, daß aufgrund des Verschleißes des innersten Einzelbandes, das sich in Kontakt mit den Stahlgliedern befindet, die Stahlglieder nach längerem Betrieb nicht mehr exakt geführt werden können, weil sich die Oberfläche des Einzelbandes unregelmäßig abnutzt. Folge der Oberflächenabnutzung des Einzelbandes und des daraus resultierenden "Stick-Slip-Effektes" zwischen Einzelband und Stahlgliedern ist eine selbsterregende Schwingung des Kraftübertragungsbandes, die sich auf die Kegelscheibenhälften der Sekundärriemenscheibe in Form einer Rotationsschwingung überträgt.

Diese Rotationsschwingung wiederum erfaßt das gesamte Reduktionsgetriebe und die nachfolgenden Zahnradpaarungen. Dies führt zu Getriebegeräuschen bzw. Zahnradrasseln, das als Körperschall in die Fahrgastzelle übertragen wird, wodurch der Eindruck entsteht, daß das Getriebe defekt sei oder zumindest der Qualitätseindruck geschmälert wird, obwohl der Verschleiß des Einzelbandes die Funktion des Getriebes als solche nicht beeinträchtigt.

Aufgabe der Erfindung ist daher, ein stufenloses Getriebe zu schaffen, das auch nach längerer Einsatzdauer möglichst frei von störenden Getriebegeräuschen oder Zahnradradrasseln ist.

Diese Aufgabe wird nach der Erfindung dadurch gelöst, daß das erste Rückstellzahnrad oder das Antriebsrad ein Getriebezahnrad mit Mitteln zur Einstellung des Zahnspiels ist.

Durch die Mittel zur Einstellung des Zahnspiels, die beispielsweise in dem US-Patent 5 870 928 oder in der europäischen Patentanmeldung 0 881 412 oder auch in dem europäischen Patent 0 426 678 beschrieben sind, kann das Zahnspiel erhöht werden, was eine Übertragung der Drehschwingungen der Sekundärscheibe auf das Reduktionsgetriebe hemmt oder vollständig unterdrückt. Vorgabe zur Reduzierung des Geräusches infolge der Schwingungen des Kraftübertragungsbandes ist also eine Maximierung des Zahnspieles. Allerdings würde eine Erhöhung des Zahnspieles üblicherweise zu systembedingten Getriebegeräuschen führen, so daß die Dämpfung der Drehschwingung der Sekundärscheibe mit einem kontinuierlichen Geräusch des Reduktionsgetriebes erkauft würde. Erst die Einstellung eines maximal möglichen Zahnspieles realisiert die Unterdrückung dieses lokalen Rasselns sowie kontinuierlicher Getriebegeräusche, so daß die Fahrgastzelle vor dem Eindringen von diesen Getriebegeräuschen ausreichend abgesichert ist.

Bei einer bevorzugten Ausgestaltung der Erfindung werden die Mittel zur Einstellung des Zahnspiels von einem Doppelzahnrad gebildet, das zusammen mit dem zweiten Reduktionszahnrad auf einer gemeinsamen Trägerwelle angeordnet ist. Das Doppelzahnrad, das das erste Reduktionszahnrad bildet, wird durch das Antriebsrad, das wiederum auf einer zusammen mit der Sekundärriemenscheibe auf einer gemeinsamen Welle angeordnet ist, angetrieben, während das zweite Reduktionszahnrad das Drehmoment zum Beispiel auf ein Differential ableitet.

Das Doppelzahnrad weist zwei scheibenförmige Teilzahnräder mit gleicher Zahngeometrie und gleichem effektiven Durchmesser auf, so daß bei geeignetem Drehwinkel die Zahngeometrien miteinander deckungsgleich sind. Ein erstes der Teilzahnräder ist drehfest mit der Trägerwelle verbunden, während das andere, zweite Teilzahnrad drehbar auf die Trägerwelle aufgeschoben ist, so daß es relativ zum ersten Teilzahnrad verdreht werden kann, jedoch immer konzentrisch zu diesem angeordnet bleibt. Dies kann über einen üblichen Spielsitz erfolgen, während des drehfeste Teilzahnrad etwa über eine formschlüssige Verbindung, zum Beispiel durch einen Paßstift, mit der Trägerwelle verbunden werden kann.

Die nebeneinander auf der Trägerwelle sitzenden Teilzahnräder sind über zumindest einen, bevorzugt jedoch mehrere Mitnehmer miteinander gekoppelt. Hierzu ist der Mitnehmer mit einem der Teilzahnräder verbunden und weist eine rechtwinklig zur Breitseite des Teilzahnrades hervorspringende Drucknase auf, die gegen eine korrespondierende Auflagefläche des gegenüberliegenden Teilzahnrades in Drehrichtung anstellbar ist. Bevorzugt greift hierzu der Mitnehmer in jeweils eine Nut ein, in der eine liegende Schraubenfeder als Rückstellfeder angeordnet ist.

Die Nut zur Aufnahme der Rückstellfeder soll kreissegmentförmig ausgebildet sein, wobei bevorzugt für jede der Rückstellfedern eine separate Nut vorgesehen ist und die Nuten längs einer zur Drehachse konzentrischen Kreislinie angeordnet ist. Bei einer bevorzugten Ausgestaltung der Erfindung werden drei Rückstellfedern vorgesehen, die im gleichen Abstand zueinander längs des Umfangs verteilt sind. Die Federkraft wird am effektivsten ausgenutzt, wenn die Rückstellfedern möglichst weit außen angeordnet sind, da dann die Hebelarme die größtmögliche Länge aufweisen. Bevorzugt werden die Nuten zur Aufnahme der Rückstellfedern daher im äußeren Drittel des Teilzahnrades angeordnet.

Anstelle einer Schraubenfeder kann natürlich auch jede andere Federnart eingesetzt werden, die eine Federkraft zwischen dem ersten Teilzahnrad und dem zweiten Teilzahnrad aufzubringen vermag. Da das erste Teilzahnrad ortsfest auf der Trägerwelle angeordnet ist, kann die Federkraft auch zwischen dem zweiten Teilzahnrad und der Trägerwelle selbst wirken, etwa durch eine Drehfeder, die zwischen der Trägerwelle und dem zweiten Teilzahnrad angeordnet ist.

Das Gesamtdrehmoment, also die Summe der Kräfte aller parallel geschalteter Rückstellfedern multipliziert mit dem mittleren Radius der vorgenannten Nut, beträgt bevorzugt zwischen 3 Nm und 8 Nm, wobei ein Wert von 5 Nm besonders bevorzugt wird. Dieses Gesamtdrehmoment, beaufschlagt zwischen dem Reduktionszahnrad und dem Antriebsrad auf der Sekundärriemenscheibe, ist so gewählt, daß die Beschleunigungswerte des Reduktionsgetriebes die induzierten Beschleunigungswerte der Sekundärriemenscheibe überschreiten und entgegengesetzt der Motordrehung ausgerichtet sind. Dies unterdrückt eine Dekontaktierung der Zahnflanken und somit das Getrieberasseln bzw. die damit erzeugten Energien.

Die zweite wichtige Forderung ist das Einstellen des maximal möglichen Zahnspieles zwischen dem Antriebsrad und dem ersten Teilzahnrad des Reduktionsgetriebes. Bei dieser Anwendung beträgt das für die Unterdrückung des Zahnradrasselns führende an Minimum einzustellende Zahnspiel etwa 4 mrad, was bei einem Teilkreisradius von 27 mm ein Minimum an Zahnspiel von 0,1 mm am Teilkreisdurchmesser ergibt. Das Einstellen eines optimalen Gesamtdrehmomentes zur Verhinderung einer Dekontaktierung der Zahnflanke im Zusammenhang mit einem Minimum an einzustellenden Zahnspiel sind Grundvoraussetzung für das Minimieren der auftretenden Energien und somit für das Unterdrücken des Getrieberasselns.

Die Federn werden vor der Montage des Getriebes im Antriebsstrang vorgespannt, so daß keine Vormontage unter Spannung der Federn notwendig ist. Würde das erhöhte Zahnspiel nicht vor das Reduktionsgetriebe sondern hinter diesem angeordnet, wäre bei gleichem Ausgleichspotential aufgrund der Übersetzung des Getriebes des zweiten Reduktionszahnrades und den von der Sekundärriemenscheibe induzierten Beschleunigungswerten ein Minimum an Zahnspiel von 0,2 mm am Teilkreisdurchmesser erforderlich, das jedoch zu einer Konstruktion mit erheblichen "kontinuierlichen Getriebegeräuschen" führen würde.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: ein erfindungsgemäßes Getriebe,
- Fig. 2: das erste Reduktionszahnrad des in Figur 1 dargestellten Getriebes,
- Fig. 3: das erste Teilzahnrad des in Figur 2 dargestellten Reduktionszahnrades und
- Fig. 4: das zweite Teilzahnrad des in Figur 2 dargestellten Reduktionszahnrades.

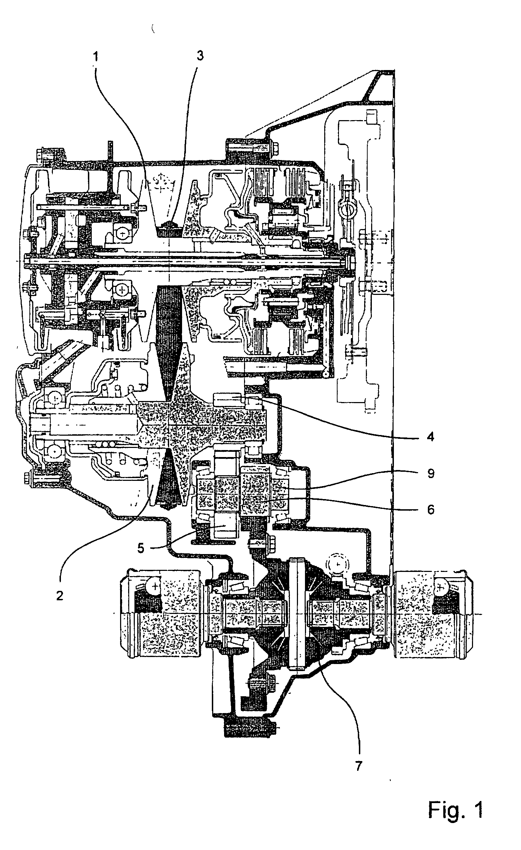

In Fig. 1 ist erfindungsgemäßes stufenloses Getriebe dargestellt. Im oberen Bereich befindet sich die Kupplung, über die das Getriebe an einen Fahrzeugmotor angeschlossen wird. Auf der hierdurch angetriebenen Welle sitzt die Primärriemenscheibe 1, die über ein Kraftübertragungsband 3 mit einer Sekundärriemenscheibe 2 verbunden ist. Die Primärriemenscheibe 1 und die Sekundärriemenscheibe 2 sind von gegenüberliegenden Kegelscheibenhälften gebildet, von denen jeweils eine gegen die Kraft einer Feder in Abhängigkeit der Motordrehzahl und der dadurch erzeugten Trumkräfte verschiebbar ist.

Die Sekundärriemenscheibe 2 ist auf einer drehbar im Getriebegehäuse gelagerten Welle zusammen mit einem Antriebsrad 4 angeordnet, das ebenfalls als Zahnrad ausgebildet ist. Das Antriebsrad 4 treibt ein Reduktionsgetriebe an, das hier von einem ersten Reduktionszahnrad 5 und einem zweiten Reduktionszahnrad 6 gebildet ist, die beide auf einer gemeinsamen Trägerwelle 9 angeordnet sind. Hierüber wird das Motormoment auf eine Kraftausleitung 7 übertragen, die, mit einer äußeren Gehäuseverzahnung, einer Innenverzahnung und zwei darauf ablaufenden inneren Kegelrädern versehen, ein Planetengetriebe bildet. Von dem so gebildeten Differential wird im gezeigten Ausführungsbeispiel die Kraft auf die Antriebwellen übertragen.

Das erste Reduktionszahnrad 5 ist als Getriebezahnrad mit einstellbarem Zahnspiel ausgebildet. Hierzu wird dieses erste Reduktionszahnrad 5 von einem links dargestellten ersten Teilzahnrad 5' und einem rechts dargestellten zweiten Teilzahnrad 5" gebildet, die nebeneinander auf der Trägerwelle 9 angeordnet sind. Das erste Teilzahnrad 5' ist drehfest mit der Trägerwelle 9 verbunden, während das zweite Teilzahnrad 5" über einen Spielsitz auf diese aufgeschoben ist. Bei einer alternativen Ausgestaltung der Erfindung zum könnte auch das Zahnspiel des Antriebsrades 4 einstellbar ausgebildet sein.

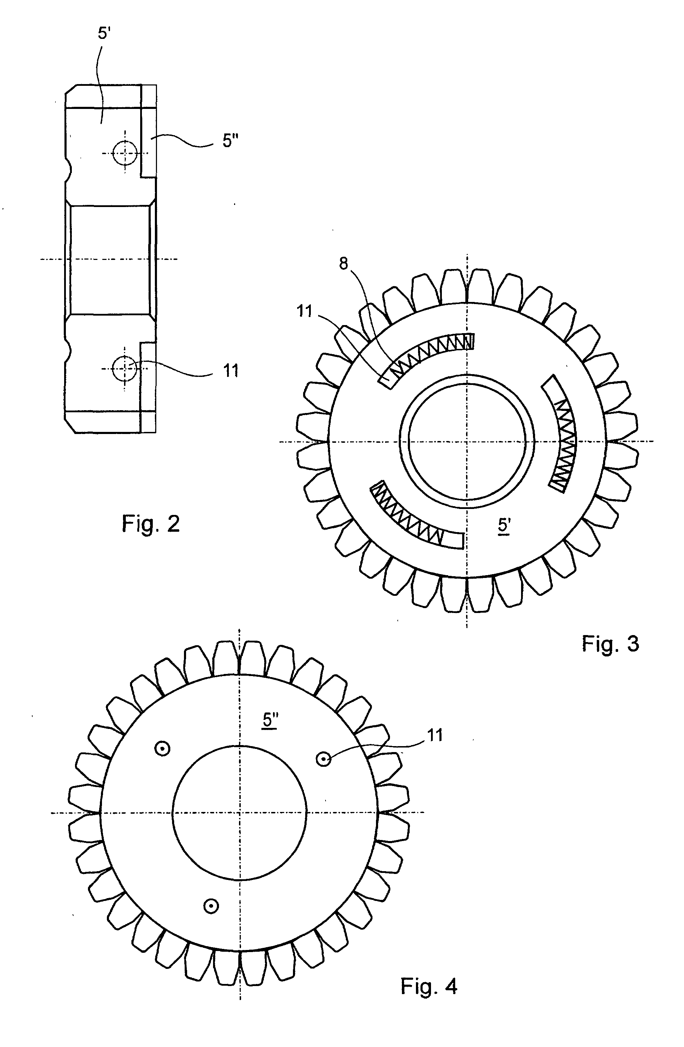

In den Figuren 2, 3 und 4 ist das Getriebezahnrad der in Figur 1 dargestellten Ausgestaltung des Getriebes gezeigt. Das Getriebezahnrad ist von dem ersten Teilzahnrad 5' und dem zweiten Getriebezahnrand 5" gebildet, die konzentrisch zueinander auf die Trägerwelle 9 aufgeschoben werden, wobei das erste Teilzahnrad 5' drehfest mit der Trägerwelle 9 verbunden ist.

Das zweite Teilzahnrad 5" ist mit Mitnehmern 10 versehen, die in Nuten 11 des ersten Teilzahnrades 5' eingreifen. In diesen Nuten ist jeweils eine Rückstellfeder 8 angeordnet, die bei Verdrehung des zweiten Teilzahnrades 5" relativ zum ersten Teilzahnrad 5' komprimiert wird und damit eine Rückstellkraft aufbaut. Um die Federenergie möglichst effektiv ausnutzen zu können und maximales Gesamtdrehmoment erzielen zu können, sind die Rückstellfedern 8 im äußersten Bereich des ersten Teilzahnrades 5' angeordnet, der gerade noch möglich ist.

Bei entspannter Rückstellfeder wird nun der Zahn in seiner effektiven Breite durch seitliches Versetzen der Zähne des ersten Teilzahnrades 5' relativ zu denjenigen des zweiten Teilzahnrades 5" in der Zahnlücke des Antriebsrades wirksam. Dies hat eine Verringerung des Zahnspieles und damit eine Verschlechterung des Getrieberasselns zur Folge. Die effektive Zahnbreite kann jedoch, nachdem ein Eingriff mit einem Zahn des zweiten Reduktionszahnrades 6 erfolgt ist, durch Rückdrehen des zweiten Teilzahnrades 5" wieder verkleinert werden, so daß sich ein größeres Zahnspiel ergibt, das die Schwingungen der Sekundärriemenscheibe 2 kompensiert.

Das anfänglich kleine Zahnspiel dagegen verschlechtert ein Rasseln des Reduktionsgetriebes. Dieses Zahnspiel kann in Abhängigkeit der Position der Rückstellfedern 8 in Motordrehrichtung oder entgegengesetzt der Motordrehrichtung ausgeglichen bzw. maximiert werden. In diesem Fall wird das Getrieberasseln mit Ausgleich des Zahnspiels entgegengesetzt der Motordrehrichtung bzw. Maximierung des Zahnspieles in Motordrehrichtung erheblich verbessert.

Das Minimum an Zahnspiel, was zur Verbesserung des Getrieberasselns führt, ist bei einer praktischen Ausgestaltung des Getriebes im Bereich des ersten Reduktionszahnrades 5 nur halb so groß wie im Bereich des zweiten Reduktionszahnrades 6. Um das Zahnspiel des zweiten Reduktionszahnrades 6 zu erhöhen, müssen im Bereich des zweiten Reduktionszahnrades 6 Maßnahmen getroffen werden, die ein Minimum an Zahnspiel maximieren, wie zum Beispiel Erweiterung der Gesamttoleranzsituation, Erweiterung des Zahnspieles, Verringerung der Zahnbreite etc., was jedoch wiederum zu kontinuierlichen Getriebegeräuschen führen kann. Zur gleichzeitigen Verhinderung des Getrieberasselns und der kontinuierlichen Getriebegeräusche ist damit die Anwendung der Erfindung durch Einsatz eines Getriebezahnrades mit den Mitteln zur Einstellung des Zahnspieles nur auf das erste Reduktionszahnrad 5 sinnvoll, wobei zusätzlich auch das zweite Reduktionszahnrad 6 mit einem einstellbaren Zahnspiel versehen sein kann.

### Bezugszeichenliste:

- 1: Primärriemenscheibe
- 2: Sekundärriemenscheibe
- 3: Kraftübertragungsband
- 4: Antriebsrad des Reduktionsgetriebes
- 5: Erstes Reduktionszahnrad
- 5': Erstes Teilzahnrad
- 5": Zweites Teilzahnrad
- 6: Zweites Reduktionszahnrad
- 7: Kraftausleitung
- 8: Rückstellfeder
- 9: Trägerwelle
- 10: Mitnehmer
- 11: Nut

## Patentansprüche

1. Stufenloses Getriebe für ein Kraftfahrzeug mit einer Kraftübertragung, die von einer Primärriemenscheibe (1) und einer mit der Primärriemenscheibe (1) über ein Kraftübertragungsband (3) verbundenen Sekundärriemenscheibe (2) gebildet ist, und mit einem der Sekundärriemenscheibe (2) im Kraftfluß nachgeschalteten Reduktionsgetriebe, das ein durch die Sekundärriemenscheibe (2) über ein zwischengeschaltetes Antriebsrad (4) mittelbar oder unmittelbar angetriebenes erstes Reduktionszahnrad (5) und ein von dem ersten Reduktionszahnrad (5) angetriebenes zweites Reduktionszahnrad (6) aufweist, wobei über das zweite Reduktionszahnrad (6) ein von dem Getriebe übertragenes Motordrehmoment auf eine Kraftausleitung (7) abgeleitet ist, **dadurch gekennzeichnet, daß**
das erste Reduktionszahnrad (5) oder das Antriebsrad (4) ein Getriebezahnrad mit Mitteln zur Einstellung des Zahnspiels ist.

2. Stufenloses Getriebe nach Anspruch 1, **dadurch gekennzeichnet, daß** die Mittel zur Einstellung des Zahnspiels von einem Doppelzahnrad gebildet sind, das zwei nebeneinander angeordnete Teilzahnräder (5',5") mit gleicher Zahngeometrie und gleichem effektiven Durchmesser aufweist, die relativ zueinander gegen die Kraft zumindest einer Rückstellfeder (8) verdrehbar sind, wobei ein erstes Teilzahnrad (5') drehfest mit einer Trägerwelle (9) des Reduktionsgetriebes verbunden ist und ein zweites Teilzahnrad (5") drehbar auf die Trägerwelle (9) aufgeschoben ist und die Zähne des zweiten Teilzahnrades (5") relativ zu denen des ersten Teilzahnrades (5') zunächst verdreht und erst nach Überwindung der Kraft der Rückstellfeder (8) zur Bildung einer gemeinsamen Zahnflanke deckungsgleich sind.

3. Stufenloses Getriebe nach dem vorhergehenden Anspruch, **dadurch gekennzeichnet, daß** das Doppelzahnrad zumindest einen Mitnehmer (10) aufweist, der mit einem der Teilzahnräder (5' oder 5") verbunden ist und gegen einen Anschlag des gegenüberliegenden Teilzahnrades (5" oder 5') anstellbar ist.

4. Stufenloses Getriebe nach Anspruch 2 oder 3, **dadurch gekennzeichnet, daß** die Rückstellfeder (8) von einer Schraubenfeder gebildet ist, die in eine kreissegmentförmige Nut (11) in einem der Teilzahnräder (5' oder 5") eingelegt ist.

5. Stufenloses Getriebe nach Anspruch 4, **dadurch gekennzeichnet, daß** zumindest drei einzelne Rückstellfedern (8) vorgesehen sind, die jeweils in einer kreissegmentförmigen Nut (11) eingelegt sind, wobei die Nuten (11) auf einer zur Drehachse des Teilzahnrades (5' oder 5") konzentrischen Kreislinie angeordnet sind.

6. Stufenloses Getriebe nach Anspruch 5, **dadurch gekennzeichnet, daß** die Nuten zur Aufnahme der Rückstellfedern (8) im äußeren Drittel des Teilzahnrades (5' oder 5") angeordnet sind.

7. Stufenloses Getriebe nach dem vorhergehenden Anspruch, **dadurch gekennzeichnet, daß** der Mitnehmer (10) mit einer verspringenden Drucknase in die Nut (11) hineinragt und die Rückstellfeder (8) sich einseitig auf dem Mitnehmer (10) und mit dem gegenüberliegenden Ende auf dem Nutende abstützt.

8. Stufenloses Getriebe nach einem der Ansprüche 2 oder 3, **dadurch gekennzeichnet, daß** die Rückstellfeder (8) eine Drehfeder ist, die zwischen der Trägerwelle (9) und einem der Teilzahnräder (5' oder 5") angeordnet ist.

9. Stufenloses Getriebe nach einem der Ansprüche 2 bis 6, **dadurch gekennzeichnet, daß** das von der Rückstellfeder (8) aufgebrachte Gesamtdrehmoment zur Erzielung einer Beschleunigung, die größer als die induzierte Beschleunigung ist, zwischen 3 Nm und 8 Nm beträgt.

10. Stufenloses Getriebe nach einem der vorhergehenden Ansprüche, **dadurch gekennzeichnet, daß** das Zahnspiel des Getriebezahnrades 0,004 mrad als Minimum beträgt.

11. Stufenloses Getriebe nach einem der vorhergehenden Ansprüche, **dadurch gekennzeichnet, daß** zwischen dem Antriebsrad (4) und dem ersten Teilzahnrad (5') zur Verhinderung des von dem Kraftübertragungsband (3) induzierten Getrieberasseln das Minimum des Zahnspieles maximiert ist.

12. Stufenloses Getriebe nach einem der vorhergehenden Ansprüche, **dadurch gekennzeichnet, daß** ein Minimum an Zahnspiel im Bereich des ersten Reduktionszahnrades (5) halb so groß ist als im Bereich des zweiten Reduktionszahnrades (6).

## Claims

1. Continuously variable transmission for a motor vehicle having a power transmission means which is formed by a primary pulley wheel (1) and a secondary pulley wheel (2) connected to the primary pulley wheel (1) via a power transmission belt (3), and having a reduction gear mechanism which is connected downstream of the secondary pulley wheel (2) in the force transmission direction and has a first reduction gear wheel (5), driven by the secondary pulley wheel (2) directly or indirectly via an intermediate drive wheel (4), and a second reduction gear wheel (6), driven by the first reduction gear wheel (5), an engine torque transmitted by the transmission being passed to a power output (7) via the second reduction gear wheel (6), **characterized in that** the first reduction gear wheel (5) or the drive wheel (4) is a transmission gear wheel having means for adjusting the tooth play.

2. Continuously variable transmission according to Claim 1, **characterized in that** the means for adjusting the tooth play are formed by a double gear wheel having two part gear wheels (5', 5'') which are arranged next to one another, have identical tooth geometries and identical effective diameters, and can be rotated relative to one another counter to the force of at least one restoring spring (8), a first part gear wheel (5') being connected fixedly to a support shaft (9) of the reduction gear mechanism so as to rotate with it, and a second part gear wheel (5'') being rotatably pushed onto the support shaft (9) and the teeth of the second part gear wheel (5'') being initially twisted relative to those of the first part gear wheel (5') and being congruent so as to form a common tooth flank only after the force of the restoring spring (8) has been overcome.

3. Continuously variable transmission according to the preceding claim, **characterized in that** the double gear wheel has at least one driver (10) which is connected to one of the part gear wheels (5' or 5'') and can be made to bear against a stop of the opposite part gear wheel (5'' or 5').

4. Continuously variable transmission according to Claim 2 or 3, **characterized in that** the restoring spring (8) is formed by a helical spring which is inserted into a circular segment-shaped groove (11) in one of the part gear wheels (5' or 5'').

5. Continuously variable transmission according to Claim 4, **characterized in that** at least three individual restoring springs (8) are provided which are each inserted into a circular segment-shaped groove (11), the grooves (11) being arranged on a circular line which is concentric with respect to the rotational axis of the part gear wheel (5' or 5'').

6. Continuously variable transmission according to Claim 5, **characterized in that** the grooves for accommodating the restoring springs (8) are arranged in the outer third of the part gear wheel (5' or 5'').

7. Continuously variable transmission according to the preceding claim, **characterized in that** a projecting pressure lug of the driver (10) projects into the groove (11) and one side of the restoring spring (8) is supported on the driver (10) and the opposite end is supported on the groove end.

8. Continuously variable transmission according to either of Claims 2 and 3, **characterized in that** the restoring spring (8) is a torsion spring which is arranged between the support shaft (9) and one of the part gear wheels (5' or 5'').

9. Continuously variable transmission according to one of Claims 2 to 6, **characterized in that** the total torque applied by the restoring spring (8) in order to achieve an acceleration greater than the induced acceleration is between 3 Nm and 8 Nm.

10. Continuously variable transmission according to one of the preceding claims, **characterized in that** the minimum tooth play of the transmission gear wheel is 0.004 mrad.

11. Continuously variable transmission according to one of the preceding claims, **characterized in that** the minimum tooth play is maximized between the drive wheel (4) and the first part gear wheel (5') in order to prevent the transmission rattle induced by the power transmission belt (3).

12. Continuously variable transmission according to one of the preceding claims, **characterized in that** the minimum tooth play in the region of the first reduction gear wheel (5) is half as large as in the region of the second reduction gear wheel (6).

## Revendications

1. Transmission à variation continue pour un véhicule automobile comprenant une transmission de force, qui est formée par une poulie à courroie primaire (1) et une poulie à courroie secondaire (2) connectée à la poulie à courroie primaire (1) par le biais d'une bande de transmission de force (3), et comprenant un engrenage réducteur monté en aval de la poulie à courroie secondaire (2) dans le flux de forces, qui présente une première roue dentée réductrice (5) entraînée directement ou indirectement par la poulie à courroie secondaire (2) par le biais d'une roue d'entraînement intermédiaire (4) et une deuxième roue dentée réductrice (6) entraînée par la première roue dentée réductrice (5), un couple moteur transmis par la transmission par le biais de la deuxième roue dentée réductrice (6) étant dérivé vers une sortie de force (7), **caractérisée en ce que**
la première roue dentée réductrice (5) ou la roue d'entraînement (4) est une roue dentée d'engrenage avec des moyens d'ajustement du jeu entre les dents.

2. Transmission à variation continue selon la revendication 1, **caractérisée en ce que** les moyens d'ajustement du jeu entre les dents sont formés par une roue dentée double qui présente deux roues dentées partielles (5' 5") disposées l'une à côté de l'autre avec la même géométrie de dents et le même diamètre effectif, qui peuvent tourner l'une par rapport à l'autre à l'encontre de la force d'au moins un ressort de rappel (8), une première roue dentée partielle (5') étant connectée fixe en rotation à un arbre de support (9) de l'engrenage réducteur et une deuxième roue dentée partielle (5") étant poussée de manière à pouvoir tourner sur l'arbre de support (9) et les dents de la deuxième roue dentée partielle (5") étant d'abord tournées par rapport à celles de la première roue dentée partielle (5') et étant alignées seulement après avoir surmonté la force du ressort de rappel (8) pour former un flanc de dents commun.

3. Transmission à variation continue selon la revendication précédente, **caractérisée en ce que** la roue dentée double présente au moins un dispositif d'entraînement (10) qui est connecté à l'une des roues dentées partielles (5' ou 5") et qui peut être placé contre une butée de la roue dentée partielle opposée (5" ou 5').

4. Transmission à variation continue selon la revendication 2 ou 3, **caractérisée en ce que** le ressort de rappel (8) est formé par un ressort à boudin qui est introduit dans une rainure en forme de segment de cercle (11) dans l'une des roues dentées partielles (5' ou 5").

5. Transmission à variation continue selon la revendication 4, **caractérisée en ce que** l'on prévoit au moins trois ressorts de rappel individuels (8) qui sont introduits respectivement dans une rainure en forme de segment de cercle (11), les rainures (11) étant disposées sur une ligne circulaire concentrique à l'axe de rotation de la roue dentée partielle (5' ou 5").

6. Transmission à variation continue selon la revendication 5, **caractérisée en ce que** les rainures pour recevoir les ressorts de rappel (8) sont disposées dans le tiers extérieur de la roue dentée partielle (5' ou 5").

7. Transmission à variation continue selon l'une quelconque des revendications précédentes, **caractérisée en ce que** le dispositif d'entraînement (10) pénètre avec un nez de pression élastique dans la rainure (11) et le ressort de rappel (8) s'appuie d'un côté sur le dispositif d'entraînement (10) et avec l'extrémité opposée sur l'extrémité de la rainure.

8. Transmission à variation continue selon l'une quelconque des revendications 2 ou 3, **caractérisée en ce que** le ressort de rappel (8) est un ressort de torsion qui est disposé entre l'arbre de support (9) et l'une des roues dentées partielles (5' ou 5").

9. Transmission à variation continue selon l'une quelconque des revendications 2 à 6, **caractérisée en ce que** le couple total appliqué par le ressort de rappel (8) pour l'obtention d'une accélération supérieure à l'accélération induite, est compris entre 3 Nm et 8 Nm.

10. Transmission à variation continue selon l'une quelconque des revendications précédentes, **caractérisée en ce que** le jeu minimum entre les dents de la roue dentée d'engrenage est de 0,004 mrad.

11. Transmission à variation continue selon l'une quelconque des revendications précédentes, **caractérisée en ce que** le minimum du jeu entre les dents est maximisé entre la roue d'entraînement (4) et la première roue dentée partielle (5') pour empêcher des cliquetis d'engrenage induits par la bande de transmission de force (3).

12. Transmission à variation continue selon l'une quelconque des revendications précédentes, **caractérisée en ce qu'**un minimum du jeu entre les dents dans la région de la première roue dentée réductrice (5) est moitié moins important que dans la région de la deuxième roue dentée réductrice (6).
